# FASCICULE DE BREVET EUROPEEN

(11) **EP 3 388 266 B1**
(45) Date de publication et mention de la délivrance du brevet: **09.12.2020**
(21) Numéro de dépôt: 18166808.8
(22) Date de dépôt: 11.04.2018
(51) Int. Cl.: B60J 5/10, B60J 5/04

(54) **OUVRANT DE VÉHICULE AUTOMOBILE**
TÜR EINES KRAFTFAHRZEUGS
DOOR OF A MOTOR VEHICLE

(30) Priorité: 11.04.2017 FR 1753161
(43) Date de publication de la demande: 17.10.2018
(73) Titulaire: Flex-N-Gate France, 25405 Audincourt (FR)
(72) Inventeur: IMBERT, Didier, 25460 ETUPES (FR); DROZ-BARTHOLET, Laurent, 25400 AUDINCOURT (FR); HENIGUE, Christian, 90100 SUARCE (FR)
(74) Mandataire: Lavoix

(56) Documents cités:
- EP-A1- 1 130 279
- DE-A1- 4 237 584
- JP-A- H0 911 829
- JP-A- 2016 043 575
- US-A1- 2003 107 235

## Description

La présente invention concerne un ouvrant de véhicule automobile selon le préambule de la revendication 1.

L'invention concerne par exemple des ouvrants de véhicules automobiles, tels que des hayons ou des portes.

On connaît dans l'état de la technique, tel que JP 2016 043575 A, un ouvrant de véhicule automobile comportant une pièce structurelle en matière plastique formant un corps de l'ouvrant.

Afin de répondre aux contraintes définies par les constructeurs du véhicule, en termes notamment de déformation de l'ouvrant selon des critères de flexion, torsion, appui latéral, effort exceptionnel (tels que définis par le règlement numéro 11 de la Commission Economique pour l'Europe des Nations Unies (CEE-ONU), dans sa version du 15 juin 2015, concernant les prescriptions uniformes relatives à l'homologation des véhicules en ce qui concerne les serrures et organes de fixation des portes), etc., la rigidité structurelle de cette pièce nécessite d'être renforcée. La solution couramment adoptée consiste à adjoindre à la pièce structurelle en plastique un élément de renforcement, par exemple en métal, afin de rigidifier l'ensemble.

De manière connue, l'élément de renforcement est rapporté et vissé sur la pièce structurelle en plastique pour former une pièce structurelle renforcée.

La fixation de l'élément de renforcement sur la pièce structurelle en plastique nécessite plusieurs opérations telles que des opérations de mise en place d'inserts de vissage sur la pièce en plastique, le positionnement du renfort sur la pièce plastique, la mise en place de vis de pré-maintien, et enfin une opération de vissage de l'élément de renforcement sur la pièce structurelle en plastique.

La multiplicité des opérations précitées pour fixer l'élément de renforcement sur la pièce structurelle demande un temps relativement important et entraîne un coût important de la pièce structurelle renforcée.

En outre, l'élément de renforcement étant généralement fixé sur la pièce structurelle en plastique par des vis, les contraintes appliquées sur la pièce structurelle renforcée sont souvent concentrées sur les points de fixation au niveau des vis et peuvent dépasser les seuils admissibles par la matière plastique de la pièce structurelle.

Il en résulte une mauvaise résistance dans le temps de la pièce structurelle renforcée ainsi qu'une dégradation de la liaison mécanique entre la pièce structurelle en plastique et l'élément de renforcement.

Un objectif de l'invention est de proposer un ouvrant de véhicule dans lequel une bonne liaison mécanique est assurée entre l'enveloppe et la pièce de renforcement. Un objectif de l'invention est également de proposer un ouvrant de véhicule peu coûteux.

A cet effet, l'invention concerne un ouvrant de véhicule du type précité et comprenant les caractéristiques de la partie caractérisante de la revendication 1.

En faisant pénétrer un segment de l'enveloppe dans un orifice de l'élément de renforcement et en prévoyant une partie de recouvrement sur la face externe de l'élément de renforcement, une bonne liaison mécanique obtenue en une seule opération de moulage est assurée entre l'enveloppe et la pièce de renforcement.

En particulier, le segment et la zone de recouvrement assurent une bonne adhérence de l'enveloppe à la pièce de renforcement.

Le segment pénétrant dans l'orifice de l'élément de renforcement et la zone de recouvrement limitent également les déplacements pouvant apparaître entre l'élément de renforcement et l'enveloppe suite aux contraintes mécaniques appliquées sur l'ouvrant du véhicule.

Selon des modes de réalisation préférés de l'invention, l'ouvrant de véhicule présente également l'une ou plusieurs des caractéristiques des revendications 2 à 10, prise(s) isolément ou suivant toute(s) combinaison(s) techniquement possible(s).

D'autres aspects et avantages de l'invention apparaîtront à la lecture de la description qui suit, donnée uniquement à titre d'exemple et faite en se référant aux dessins annexés, dans lesquels :
- la figure 1 est une vue en perspective d'un véhicule automobile comprenant un ouvrant,
- la figure 2 est une vue de détails d'une partie interne de l'ouvrant du véhicule automobile de la figure 1,
- la figure 3, est une vue en coupe de la figure 2, définie selon le plan de coupe représenté par l'axe III-III sur la figure 2,
- la figure 4 est une vue en coupe de la figure 2, définie selon le plan de coupe représenté par l'axe IV-IV sur la figure 2, et
- la figure 5 est une vue d'une demi-coupe de la figure 2, définie selon le plan de coupe représenté par l'axe V-V sur la figure 2.

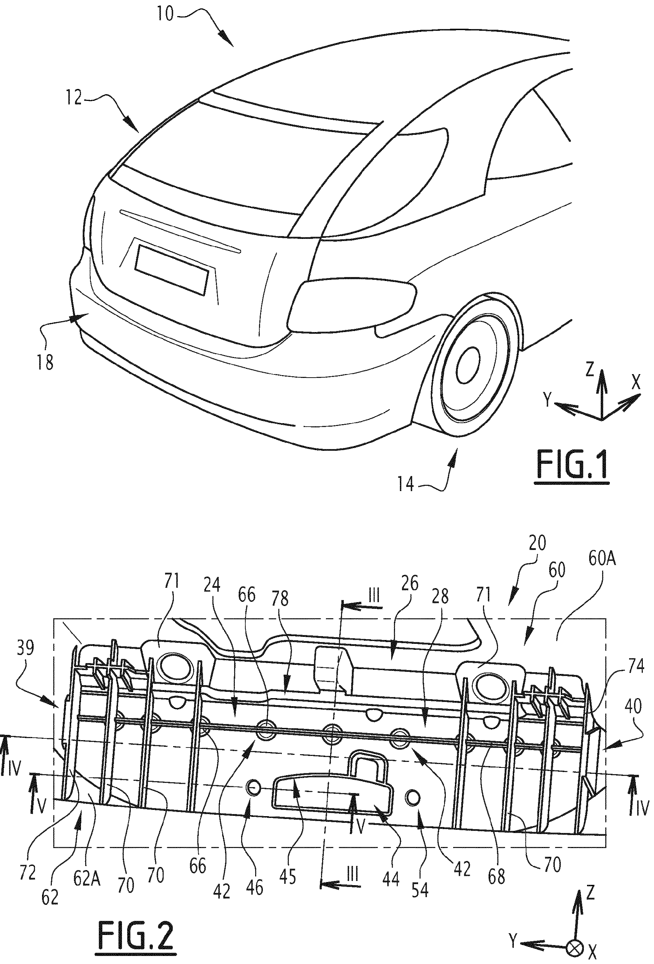

Un véhicule automobile 10 comprenant un ouvrant 12 est représenté sur la figure 1.

On définit, dans la présente description, une direction longitudinale représentée par l'axe X, correspondant à la direction avant-arrière du véhicule 10, nommée dans la suite de la description « direction longitudinale X ».

On définit, dans la présente description, une direction transversale, perpendiculaire à la direction longitudinale, parallèle à l'écartement des roues avants (non représentées sur les dessins) ou des roues arrières 14 du véhicule automobile 10, nommée dans la suite de la description « direction transversale Y ».

On définit, en outre, dans la présente description, une direction d'élévation représentée par l'axe Z, nommée dans la suite de la description « direction d'élévation Z ». La direction d'élévation Z est une direction perpendiculaire à la direction longitudinale X et à la direction transversale Y.

Dans l'exemple de réalisation décrit ici, l'ouvrant 12 est un hayon de coffre arrière du véhicule automobile 10.

L'ouvrant 12 est monté articulé sur un élément de caisse du véhicule 10, au voisinage du bord supérieur d'une ouverture d'accès au volume intérieur du coffre arrière. Le volume intérieur du coffre arrière est délimité en partie basse par un élément de caisse 18 du véhicule 10.

L'ouvrant 12 est propre à pivoter autour d'un axe parallèle à la direction transversale Y entre une position d'ouverture (non représentée ici), dans laquelle l'accès au coffre est possible et une position de fermeture, dans laquelle l'accès au coffre depuis l'extérieur du véhicule 10 est impossible.

Un tel ouvrant 12 comprend une pièce structurelle 20, formant un corps de l'ouvrant 12, dans laquelle est destinée à être agencé une serrure permettant de verrouiller l'ouvrant 12 en position de fermeture.

Dans le présent exemple, la pièce structurelle 20 n'est pas visible depuis l'extérieur du véhicule 10 et forme au moins une partie de la face interne de l'ouvrant.

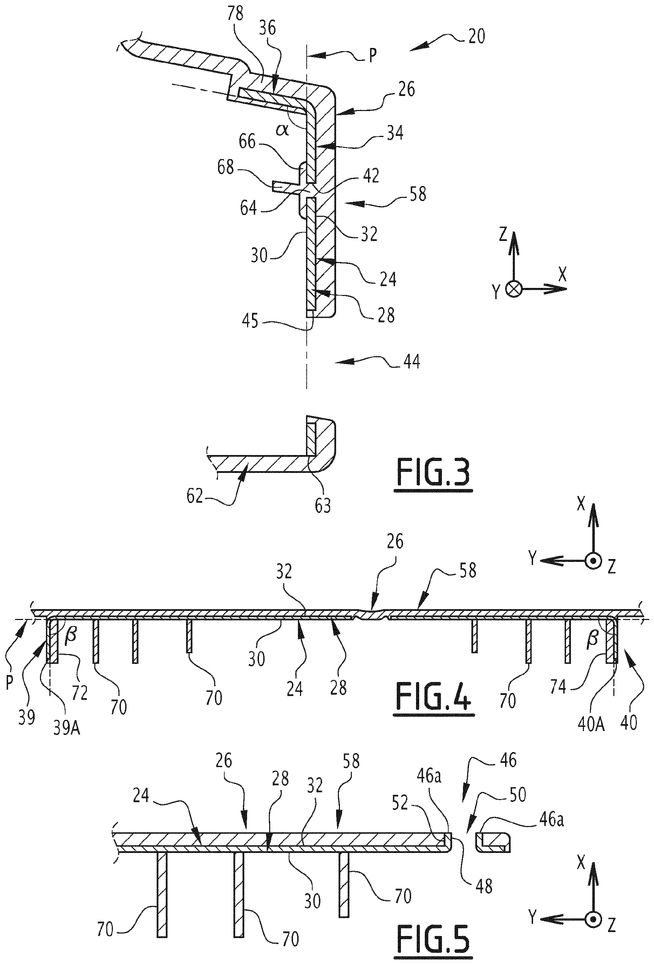

En référence aux figures 2 et 3, la pièce structurelle 20 comprend un élément de renforcement 24 et une enveloppe 26 en matière plastique surmoulée sur l'élément de renforcement 24.

L'élément de renforcement 24 comprend un corps 28. Le corps 28 présente une face externe 30 et une face interne 32. La face externe 30 et la face interne 32 sont sensiblement parallèles l'une par rapport à l'autre.

On entend, dans la présente description par « face interne », une face orientée vers l'intérieur du véhicule 10 et par « face externe », une face orientée vers l'extérieur du véhicule 10. En outre, on entend, dans la présente description par « partie interne », une partie d'un élément orientée vers l'intérieur du véhicule 10 et par «partie externe », une partie d'un élément orientée vers l'extérieur du véhicule 10.

On entend également dans la présente description par « épaisseur de l'élément de renforcement 24 », une distance mesurée entre la face externe 30 et la face interne 32 du corps 28 de l'élément de renforcement 24.

En référence à la figure 3, le corps 28 présente une partie centrale 34 s'étendant selon un plan principal P, par exemple normal à la direction longitudinale X.

Dans la partie centrale 34 du corps 28 de l'élément de renforcement 24, la face externe 30 et la face interne 32 de l'élément de renforcement 24 sont sensiblement parallèles l'une à l'autre selon un plan normal à la direction longitudinale X.

Le corps 28 présente en outre une partie d'extrémité supérieure 36 recourbée par rapport à la partie centrale 34 dudit corps 28, en direction de l'extérieur du véhicule 10. On entend, dans la présente description, par « supérieur », un élément qui est situé au-dessus d'un autre élément par rapport à la direction d'élévation Z du véhicule 10.

La partie d'extrémité supérieure 36 de l'élément de renforcement 24 s'étend dans un plan formant un angle α avec le plan principal P, dans lequel s'étend la partie centrale 34 du corps 28. Autrement dit, la partie d'extrémité supérieure 36 forme un angle non nul avec la partie centrale 34 du corps 28 de l'élément de renforcement 24. Par exemple, la partie d'extrémité supérieure 36 forme un angle α compris entre 90 degrés et 180 degrés avec la partie centrale 34, par exemple 90 degrés.

En référence à la figure 4, le corps 28 présente également deux parties d'extrémité latérales 39, 40 recourbées par rapport à la partie centrale 34. Les parties d'extrémité latérales 39, 40 sont des parties du corps 28 situés de part et d'autre de la partie centrale 34 du corps 28 selon la direction transversale Y.

Chaque partie d'extrémité latérale 39, 40 s'étend dans un plan formant un angle β non nul avec le plan principal P dans lequel s'étend la partie centrale 34 de l'élément de renforcement 24. Autrement dit, chaque partie d'extrémité latérale 39, 40 forme un angle β non nul avec la partie centrale 34 du corps 28 de l'élément de renforcement 24. Par exemple, chaque partie d'extrémité latérale 39, 40 forme un angle β interne compris entre 90 degrés et 180 degrés avec la partie centrale 34. En l'espèce, les parties d'extrémité latérales 39, 40 forment un angle β sensiblement égal à 90 degrés avec la partie centrale 34.

Le corps 28 présente en outre au moins un orifice 42, visible sur la figure 3. L'orifice 42 est ménagé dans la partie centrale 34 du corps 28.

L'orifice 42 est débouchant, c'est-à-dire qu'il traverse la face externe 30 et la face interne 32 du corps 28.

Selon un mode de réalisation, le corps 28 présente une pluralité d'orifices 42 régulièrement répartis selon la direction transversale Y. Par exemple, le corps 28 présente entre un et dix orifices 42.

Chaque orifice 42 comprend un centre.

Par exemple, chaque orifice 42 présente une forme circulaire. Autrement dit, chaque orifice 42 présente une section circulaire dans un plan de coupe normal à la direction longitudinale X.

Pour chaque orifice 42, une pluralité de directions radiales sont définies. Chaque direction radiale s'étend dans un plan normal à la direction longitudinale X et passe par le centre de cet orifice 42.

Par exemple, chaque orifice 42 présente un rayon compris entre 0,15 mm et 29,5 mm.

Le corps 28 présente par ailleurs au moins une ouverture 44 ménagée dans l'épaisseur de l'élément de renforcement 24, destinée à accueillir au moins un mécanisme de la serrure de l'ouvrant 12 du véhicule 10. Plus précisément, l'ouverture 44 est ménagée dans une épaisseur de la partie centrale 34 de l'élément de renforcement 24. L'ouverture 44 constitue un trou débouchant, traversant la face externe 30 et la face interne 32 du corps 28 de l'élément de renforcement 24.

L'ouverture 44 présente, par exemple, une section sensiblement rectangulaire dans un plan normal à direction longitudinale X.

L'ouverture 44 définit une bordure 45 du corps 28 de l'élément de renforcement 24. La bordure 45 correspond à la partie du corps 28 formant la périphérie de l'ouverture 44. La bordure 45 s'étend entre la face externe 30 du corps 28 et la face interne 32 dudit corps 28. Ainsi, la bordure 45 constitue une épaisseur du corps 28 de l'élément de renforcement.

En référence à la figure 5, l'élément de renforcement 24 comprend, en outre, au moins un fût 46, aussi appelé fût de vissage, s'étendant en saillie vers l'intérieur de la face interne 32 du corps 28 de l'élément de renforcement 24.

Le fût 46 présente une première paroi 48 définissant un trou 50 dans le corps 28 de l'élément de renforcement 24 et une deuxième paroi 52 en saillie de la face interne 32 du corps 28. La deuxième paroi 52 est opposée à la première paroi 48 du fût 46, c'est-à-dire que la deuxième paroi 52 du fût 46 forme le diamètre externe du trou 50 et que la première paroi 48 du fût 46 forme le diamètre interne du trou 50. Autrement dit, la première paroi 48 du fût 46 est orientée vers l'intérieur du trou 50 et la deuxième paroi 52 est orientée vers l'extérieur du trou 50.

La première paroi 48 du fût 46 est obtenue par déformation de la face externe 30 du corps 28 de l'élément de renforcement 24 et la deuxième paroi 52 du fût 46 est obtenue par déformation de la face interne 32 du corps 28 de l'élément de renforcement 24.

Comme visible sur la figure 2, le fût 46 est agencé, par exemple, au droit de l'ouverture 44 selon la direction transversale Y. Dans le mode de réalisation décrit ici, le fût 46 est adapté pour recevoir un élément de fixation de la serrure, tel qu'une vis.

Le corps 28 présente, par exemple, un deuxième fût 54, identique au premier fût 46, disposé de l'autre côté de l'ouverture 44 selon la direction transversale Y, au droit de ladite ouverture 44.

En variante, le corps 28 présente plus de deux fûts pour fixer la serrure.

Encore en variante, le ou les fûts peuvent être disposés différemment par rapport à l'ouverture 44, et être disposés, par exemple, au-dessus de l'ouverture 44 et/ou en-dessous de l'ouverture 44.

Les fûts 46, 54 assurent du fait de leur géométrie, une fonction anti-fluage de la matière plastique de l'enveloppe 26 lors du serrage des éléments de fixation de la serrure.

L'élément de renforcement 24 peut être réalisé, par exemple, en métal tel que de l'acier, de l'aluminium, du magnésium, ou autre.

Lorsque l'élément de renforcement 24 est en métal, l'élément de renforcement 24 présente, par exemple, une épaisseur comprise entre 0,5 millimètres (mm) et 5 mm.

En variante, l'élément de renforcement 24 est en un matériau composite. Par exemple, le matériau composite est un matériau en fibres de verre, en fibres de carbone ou encore en d'autres fibres, telles que des fibres naturelles, noyées dans une matrice en matériau thermoplastique ou thermodurcissable.

Lorsque l'élément de renforcement 24 est en un matériau composite, l'épaisseur de l'élément de renforcement 24 est, par exemple, supérieure à 0,5 mm, et en particulier comprise entre 0,5 mm et 10 mm.

L'enveloppe 26 est à présent décrite.

Comme visible sur la figure 2, l'enveloppe 26 est au moins en partie surmoulée sur l'élément de renforcement 24. Par exemple, l'enveloppe 26 est en un matériau plastique.

Dans le mode de réalisation décrit ici, l'enveloppe 26 est formée d'une seule pièce.

En référence à la figure 3, l'enveloppe 26 présente une portion centrale 58 recouvrant la face interne 32 de la partie centrale 34 de l'élément de renforcement 24. Ainsi, la partie centrale 34 de l'élément de renforcement est surmoulée par la portion centrale 58 de l'enveloppe 26. La portion centrale 58 de l'enveloppe 26 s'étend selon un plan parallèle au plan principal P dans lequel s'étend la partie centrale 34 du corps 28 de l'élément de renforcement 24.

La portion centrale 58 de l'enveloppe 26 forme une partie interne de l'enveloppe 26. En d'autres termes, la portion centrale 58 est orientée vers l'intérieur du véhicule 10 par rapport à l'élément de renforcement 24.

L'enveloppe 26 présente en outre une portion supérieure 60, visible sur la figure 2 et une portion inférieure 62 s'étendant à partir de la portion centrale 58 de l'enveloppe 26, visible sur les figures 2 et 3. La portion supérieure 60 et la portion inférieure 62 sont inclinées d'un angle non nul par rapport à la portion centrale 58 de l'enveloppe 26.

Comme visible sur la figure 3, la portion inférieure 62 surmoule un bord libre inférieur 63 de de la pièce de renforcement 24.

L'enveloppe 26 présente une partie externe comprenant au moins un segment 64 traversant un orifice 42 et une partie de recouvrement 66 recouvrant localement le bord dudit l'orifice 42 sur la face externe 30 du corps 28 de l'élément de renforcement 24. La partie de recouvrement peut présenter une section circulaire ou oblongue, dans un plan de coupe normal à la direction longitudinale X.

Par « partie externe de l'enveloppe 26 », on entend une partie de l'enveloppe 26 orientée vers l'extérieur du véhicule 10 par rapport à l'élément de renforcement 24, c'est-à-dire s'étendant du côté de la face externe 30 de l'élément de renforcement 24.

Par « localement », on entend que la partie de recouvrement 66 s'étend sur une zone limitée autour du bord de l'orifice 42 de l'élément de renforcement 24. En particulier, la partie de recouvrement 66 s'étend sur une zone limitée de la face externe 30 de l'élément de renforcement 24 dans toutes les directions radiales autour de l'orifice 42, à partir du centre de cet orifice 42.

Par exemple, la partie de recouvrement 66 s'étend sur une zone limitée autour du bord de l'orifice 42 de l'élément de renforcement 24 s'étendant sur une distance comprise entre 0,5 mm et 30 mm autour de l'orifice 42, mesurée à partir du centre de l'orifice 42. Plus précisément, la partie de recouvrement 66 s'étend sur une zone de la face externe 30 de l'élément de renforcement 24 s'étendant sur une distance comprise entre 0,5 mm et 30 mm selon toutes les directions radiales, la distance étant mesurée à partir du centre de cet orifice 42. La dimension totale de la partie de recouvrement 66 est par exemple comprise entre 1 mm et 60 mm selon toutes les directions radiales.

Selon un autre exemple, la distance mesurée à partir du centre de l'orifice 42 est comprise entre 0,25 mm et 15 mm selon toutes les directions radiales. La dimension totale de la partie de recouvrement 66 est par exemple comprise entre 0,5 mm et 30 mm selon toutes les directions radiales. Dans ce cas, le rayon de l'orifice 42 est par exemple compris entre 0,15 mm et 14,5 mm.

Par exemple, lorsque la partie de recouvrement 66 est oblongue, la dimension de la partie de recouvrement 66 mesurée à partir du centre de l'orifice 42 est variable. Autrement dit, la dimension de la partie de recouvrement 66 mesurée à partir du centre de l'orifice 42 varie en fonction de la direction radiale parmi la pluralité de directions radiales selon laquelle ladite dimension est mesurée.

On comprend que la zone de recouvrement 66 ne recouvre pas toute la face externe 30 du corps 28 de l'élément de renforcement 24.

Selon un mode de réalisation, lorsque plusieurs orifices 42 sont ménagés dans le corps 28 de l'élément de renforcement 24, la partie externe de l'enveloppe 26 comprend une pluralité de segments 64 traversant chacun des orifices 42, et une pluralité de parties de recouvrement 66 recouvrant localement le bord de chacun des orifices 42 sur la face externe 30 de l'élément de renforcement 24.

Grâce au segment 64 pénétrant dans les orifices 42 et à la partie de recouvrement 66 recouvrant localement le bord d'un orifice 42, un positionnement précis est assuré entre la pièce de renforcement 24 et l'enveloppe 26 et une bonne liaison mécanique est créée entre la pièce de renforcement 24 et l'enveloppe 26.

Dans ce cas, comme visible sur la figure 2, une partie de recouvrement 66 est espacée d'une autre partie de recouvrement 66 par une partie de la face externe 30 du corps 28 de l'élément de renforcement 24, c'est-à-dire qu'il y a une absence de matière formant l'enveloppe 26 entre chacune des zones de recouvrement 66.

La partie externe de l'enveloppe 26 comprend en outre une nervure transverse 68 reliant les parties de recouvrement 66 entre elles. La nervure transverse 68 fait saillie de la face externe 30 de l'élément de renforcement 26 et s'étend selon la direction transversale Y.

La partie externe de l'enveloppe 26 présente en outre une pluralité de nervures de renforcement 70.

Des nervures de renforcement 70 s'étendent en saillie de la face externe 30 du corps 28 de l'élément de renforcement 24, et s'étendent entre une face externe 60A de la portion supérieure 60 de l'enveloppe et une face externe 62A de la portion inférieure 62 de l'enveloppe 26 selon la direction d'élévation Z.

D'autres nervures de renforcement 70 s'étendent en saillie de la face externe 30 du corps 28 de l'élément de renforcement 24, entre un élément fonctionnel 71 surmoulé de l'enveloppe 26, solidaire de la face externe 60A de la portion supérieure 60 de l'enveloppe 26, et la face externe 62A de la portion inférieure 62 de l'enveloppe 26.

Les nervures de renforcement 70 présentent, dans cet exemple, des hauteurs différentes. On entend par « hauteur» dans la présente description, une distance d'un élément mesurée suivant la direction longitudinale X. Les nervures de renforcement 70 présentent des hauteurs comprises, par exemple, entre 1 mm et 60 mm.

La partie externe de l'enveloppe 26 comprend en outre, dans cet exemple, deux nervures d'extrémité 72, 74 s'étendant entre la face externe 60A de la portion supérieure 60 de l'enveloppe 26 et la face externe 62A de la portion inférieure 62 de l'enveloppe 26, selon la direction d'élévation Z. Les nervures d'extrémités 72, 74 s'étendent par ailleurs en saillie de la face externe 30 de la partie centrale 34 du corps 28 de l'élément de renforcement 24.

Les parties d'extrémité latérales 39, 40 de l'élément de renforcement 24 sont au moins en partie surmoulées respectivement par une nervure d'extrémité 72, 74, comme représenté de manière plus détaillée sur la figure 4. En particulier, chaque nervure d'extrémité 72, 74 recouvre la face externe 30 des parties d'extrémités latérales 39, 40 du corps 28 et un bord libre 39A, 40A de chacune des parties d'extrémité latérales 39, 40.

En variante, chaque nervure d'extrémité 72, 74 recouvre la face interne 32 des parties d'extrémité latérales 39, 40 du corps 28 et un bord libre 39A, 40A de chacune des parties d'extrémité latérales 39, 40.

Encore, en variante, chaque nervure d'extrémité 72, 74 recouvre à la fois la face interne 32 et la face externe 30 des parties d'extrémité latérales 39, 40 du corps 28 et un bord libre 39A, 40A de chacune des parties d'extrémité latérales 39, 40. Dans ce cas, chaque nervure d'extrémité 72, 74 surmoule totalement les parties d'extrémité latérales 39, 40 du corps 28.

Chacune des nervures d'extrémités 72, 74 présentent une longueur sensiblement égale à la longueur de la partie d'extrémité latérale 39, 40 qu'elle surmoule.

La nervure transverse 68 est solidaire des nervures d'extrémité 72, 74 et des nervures de renforcement 70.

La nervure transverse 68, les nervures de renforcement 70 et les nervures d'extrémité 72, 74 permettent de limiter les déformations de l'élément de renforcement 24 et de maintenir l'élément de renforcement 24 dans le plan principal P en empêchant tout mouvement dudit élément de renforcement 24 hors du plan principal P. Cela permet alors de maintenir l'élément de renforcement 24 « tendu ».

Le fait de surmouler les parties d'extrémité latérales 39, 40 de l'élément de renforcement 24 permet d'améliorer la résistance en arrachement de l'enveloppe 26. En outre, la partie centrale 34 de l'élément de renforcement 24 reste sensiblement plane lorsque la pièce structurelle 20 de l'ouvrant 12 est soumise à des efforts. Autrement dit, les déformations de l'élément de renforcement 24 sont limitées.

En outre, comme visible sur la figure 3, la portion d'extrémité supérieure 36 de l'élément de renforcement 24 est surmoulée par l'enveloppe 26. Plus précisément, la partie externe de l'enveloppe 26 présente une nervure 78 en saillie de la portion centrale 58 de l'enveloppe 26, dans laquelle est incluse la portion d'extrémité supérieure 36 du corps 28 de l'élément de renforcement 24.

La nervure 78 relie des extrémités supérieures des nervures de renforcement 70 entre-elles.

En outre, comme visible sur les figures 2 et 3, la bordure 45 de l'ouverture 44 est recouverte par l'enveloppe 26 et affleure la face externe 30 du corps 28 de l'élément de renforcement 24, c'est-à-dire que l'enveloppe 26 recouvre l'épaisseur de l'élément de renforcement 24 au niveau de la bordure 45 de l'ouverture 44.

Grâce à ces dispositions, l'élément de renforcement 24 est dissimulé par l'enveloppe 26 dans l'ouverture 44 de l'élément de renforcement 24.

Par ailleurs, le fait que la bordure 45 soit recouverte par l'enveloppe 26 contribue à l'obtention d'une bonne liaison mécanique entre l'élément de renforcement 24 et l'enveloppe 26.

En outre, comme visible sur la figure 5, la deuxième paroi 52 du fût 46 est surmoulée par l'enveloppe 26. Autrement dit, la partie interne de l'enveloppe 26 formée par la portion centrale 58 de l'enveloppe 26 affleure une extrémité libre 46a du fût 46.

La deuxième paroi de l'autre fût 54 est également surmoulée par l'enveloppe 26, c'est-à-dire que la partie interne de l'enveloppe 24 formée par la portion centrale 58 de l'enveloppe 26 affleure une extrémité libre du fût 54.

Grâce à cet agencement, les éléments de fixations de la serrure sont introduits dans le trou 50 formé par le fût 46, sans fluage d'une partie plastique de l'enveloppe 26.

Lorsque l'élément de renforcement 24 présente un ou plusieurs autre(s) fût(s) 54, les éléments de fixation de la serrure sont également introduits dans chacun des trous formés par le ou lesdits fût(s), sans fluage d'une partie plastique de l'enveloppe.

Un procédé de fabrication de la pièce structurelle 20 va maintenant être décrit.

L'élément de renforcement 24 est tout d'abord fourni. Il est inséré dans un moule, le moule comprenant une matrice et un poinçon formant une cavité de moulage présentant une forme complémentaire de celle de l'enveloppe 26.

L'élément de renforcement 24 est disposé dans le moule soit contre le poinçon, soit contre la matrice.

La matrice et le poinçon forment une chambre dans laquelle est disposé l'élément de renforcement 24.

Puis, la matière plastique est injectée dans la chambre et la matière plastique comble la chambre, du poinçon jusqu'à la matrice.

En variante, l'enveloppe peut être formée par compression autour de l'élément de renforcement 24.

Grâce à l'invention décrite ci-dessus, on obtient une pièce structurelle 20 d'ouvrant 12 de véhicule 10 renforcée, dans laquelle une bonne liaison mécanique est assurée entre l'enveloppe 26 et la pièce de renforcement 24.

La bonne liaison mécanique entre l'élément de renforcement 24 et l'enveloppe 26 plastique est assurée grâce à la surface surmoulée de l'enveloppe 26 correspondant à la partie interne de l'enveloppe 26, grâce aux segments 64 de l'enveloppe 26 traversant les orifices 42, ainsi que grâce aux zones de recouvrement 66 recouvrant localement les bords des orifices 42 sur la face externe 30 du corps 28 de l'élément de renforcement 24.

La bonne liaison mécanique entre l'élément de renforcement 24 est également assurée grâce aux nervures 70 de l'enveloppe 26, au surmoulage des nervures d'extrémité 39, 40 et de la nervure 78 de l'enveloppe 26 sur des parties correspondantes de l'élément de renforcement 24.

L'ensemble de ces parties de surmoulage de l'enveloppe 26 sur des parties correspondantes de l'élément de renforcement 24 permet une répartition des efforts sur tout l'élément de renforcement 24, contrairement à l'état de l'art où l'élément de renforcement est rapporté puis vissé par des vis et où les contraintes sont concentrées uniquement sur ces points de fixation

En outre, grâce à l'invention, la pièce structurelle 20 peut être obtenue en une seule étape de fixation, c'est-à-dire en une seule étape de surmoulage de l'enveloppe 26 sur l'élément de renforcement 24.

Grâce à l'invention, on limite les opérations de surmoulage nécessaires à l'obtention d'une bonne liaison mécanique entre la pièce de renforcement 24 et l'enveloppe 26. L'invention permet aussi d'obtenir une pièce structurelle 20 formant un corps de l'ouvrant 12 résistante aux sollicitations mécaniques.

Par ailleurs, l'invention permet d'obtenir une pièce structurelle 20 d'ouvrant 12 de véhicule 10 simple et peu coûteuse à fabriquer.

## Revendications

1. Ouvrant (12) de véhicule automobile (10) comprenant un élément de renforcement (24) s'étendant au moins en partie selon un plan principal (P), destiné à renforcer des fixations et l'environnement autour d'une serrure de l'ouvrant (12), et une enveloppe (26) en matière plastique, comprenant une partie interne surmoulée au moins en partie sur une face interne (32) de l'élément de renforcement (24),
l'élément de renforcement (24) comprenant une pluralité d'orifices (42), et l'enveloppe (26) comprenant au moins une partie externe comportant une pluralité de segments (64) traversant chacun un orifice (42) et une pluralité de parties de recouvrement (66) recouvrant chacune localement un bord d'un orifice (42) sur une face externe (30) de l'élément de renforcement (24),
**caractérisé en ce que** la partie externe de l'enveloppe (26) comprend au moins une nervure (68) reliant les parties de recouvrement (66) entre-elles.

2. Ouvrant de véhicule automobile (10) selon la revendication 1, dans lequel chaque orifice (42) de la pluralité d'orifices présente une forme circulaire et un centre, et dans lequel, pour chaque orifice (42) de la pluralité d'orifices, la partie de recouvrement (66) recouvrant localement le bord de cet orifice (42) s'étend sur la face externe (30) de l'élément de renforcement (24) sur une zone limitée autour de cet orifice (42) et dans toutes les directions radiales autour de l'orifice (42), la partie de recouvrement (66) s'étendant à partir du centre de cet orifice (42) sur une distance comprise entre 0,5 millimètre et 30 millimètres selon lesdites directions radiales.

3. Ouvrant de véhicule automobile (10) selon la revendication 1 ou 2, dans lequel la partie interne de l'enveloppe (26) comprend une portion centrale (58) recouvrant au moins en partie la face interne (32) de l'élément de renforcement (24), s'étendant selon un plan parallèle au plan principal (P), l'enveloppe (26) comprenant en outre au moins une portion supérieure (60) et une portion inférieure (62) s'étendant chacune à partir de la portion centrale (58), la portion supérieure (60) et la portion inférieure (62) étant inclinées d'un angle non nul par rapport à la portion centrale (58) et s'étendant en saillie de la portion centrale (58) du côté de la face externe (30) de l'élément de renforcement (24).

4. Ouvrant de véhicule automobile (10) selon la revendication 3, dans lequel la partie externe de l'enveloppe (26) comporte au moins une nervure de renforcement (70) en saillie de la face externe (30) de l'élément de renforcement (24), ladite nervure de renforcement (70) s'étendant entre la portion supérieure (60) et la portion inférieure (62) de l'enveloppe (26).

5. Ouvrant de véhicule automobile (10) selon la revendication 3 ou 4, dans lequel l'élément de renforcement (24) comprend une partie centrale (34) s'étendant au moins en partie selon le plan principal (P) et des parties d'extrémités latérales (39, 40) recourbées formant un angle non nul avec la partie centrale (34), l'enveloppe (26) comprenant au moins deux nervures d'extrémité (72, 74) s'étendant entre la portion supérieure (60) et la portion inférieure (62) de l'enveloppe (26), chaque partie d'extrémité latérale (39, 40) recourbée de l'élément de renforcement (24) étant au moins en partie surmoulée par une nervure d'extrémité (72, 74).

6. Ouvrant de véhicule automobile (10) selon la revendication 5, dans lequel une extrémité supérieure (36) de l'élément de renforcement (24) est inclinée par rapport à la partie centrale (34) de l'élément de renforcement (24), l'extrémité supérieure (36) de l'élément de renforcement (24) étant surmoulée par l'enveloppe (26).

7. Ouvrant de véhicule automobile (10) selon l'une quelconque des revendications précédentes, dans lequel une ouverture (44) est ménagée dans une épaisseur de l'élément de renforcement (24) pour recevoir un mécanisme de serrure de l'ouvrant (12), une bordure (45) de l'ouverture (44) s'étendant entre la face externe (30) et la face interne (32) de l'élément de renforcement (24) et étant surmoulée par l'enveloppe (26).

8. Ouvrant de véhicule automobile (10) selon l'une quelconque des revendications précédentes, dans lequel l'élément de renforcement (24) présente au moins un fût (46, 54) s'étendant en saillie de la face interne (32) de l'élément de renforcement (24), le fût (46, 54) comprenant une première paroi (48) définissant un trou (50) et une deuxième paroi (52) surmoulée par l'enveloppe (26), la deuxième paroi (52) étant opposée à la première paroi (48).

9. Ouvrant de véhicule automobile (10) selon l'une quelconque des revendications précédentes, dans lequel l'enveloppe (26) est formée d'une seule pièce.

10. Ouvrant de véhicule automobile (10) selon l'une quelconque des revendications précédentes, formant au moins une partie d'un hayon comprenant une serrure fixée au moins en partie sur l'élément de renforcement (24).

## Patentansprüche

1. Türblatt (12) eines Kraftfahrzeugs (10), aufweisend ein Verstärkungselement (24), das sich wenigstens teilweise entlang einer Hauptebene (P) erstreckt und das dazu bestimmt ist, Fixierungen eines und die Umgebung um ein Schloss/es des Türblatts (12) zu verstärken, und eine Hülle (26) aus Kunststoffmaterial, die aufweist einen inneren Teil, der wenigstens teilweise auf eine Innenfläche (32) des Verstärkungselements (24) geformt ist,
wobei das Verstärkungselement (24) eine Mehrzahl von Öffnungen (42) aufweist, und die Hülle (26) wenigstens einen äußeren Teil aufweist, der aufweist eine Mehrzahl von Segmenten (64), die jeweils durch eine Öffnung (42) hindurchgehen, und eine Mehrzahl Abdeckteilen (66), die jeweils lokal einen Rand einer Öffnung (42) auf einer Außenfläche (30) des Verstärkungselements (24) abdecken,
**dadurch gekennzeichnet, dass** ein äußerer Teil der Hülle (26) wenigstens eine Rippe (68) aufweist, die die Abdeckteile (66) untereinander verbindet.

2. Türflügel eines Kraftfahrzeugs (10) gemäß Anspruch 1, wobei jede Öffnung (42) der Mehrzahl von Öffnungen eine Kreisform und ein Zentrum hat, und wobei, für jede Öffnung (42) der Mehrzahl von Öffnungen, der Abdeckteil (66), der lokal den Rand dieser Öffnung (42) abdeckt, sich auf der Außenseite (30) des Verstärkungselements (24) über einen begrenzten Bereich um diese Öffnung (42) und in alle Radialrichtungen um die Öffnung (42) erstreckt, wobei der Abdeckteil (66) sich ausgehend vom dem Zentrum dieser Öffnung (42) über eine Distanz zwischen 0,5 Millimeter und 30 Millimeter entlang der besagten Radialrichtungen erstreckt.

3. Türflügel eines Kraftfahrzeugs (10) gemäß Anspruch 1 oder 2, wobei der innere Teil der Hülle (26) einen zentralen Abschnitt (58) aufweist, der die Innenfläche (32) des Verstärkungselements (24) wenigstens teilweise abdeckt und sich entlang einer Ebene parallel zur Hauptebene (P) erstreckt, wobei die Hülle (26) ferner wenigstens einen oberen Abschnitt (60) und einen unteren Abschnitt (62) aufweist, die sich jeweils ausgehend von dem zentralen Abschnitt (58) erstrecken, wobei der obere Abschnitt (60) und der untere Abschnitt (62) in einem Winkel ungleich null bezüglich des zentralen Abschnitts (58) geneigt sind und sich von dem zentralen Abschnitt (58) aus vorstehend erstrecken zur Seite der Außenfläche (30) des Verstärkungselements (24).

4. Türflügel eines Kraftfahrzeugs (10) gemäß Anspruch 3, wobei der äußere Teil der Hülle (26) wenigstens eine Verstärkungsrippe (70) aufweist, die von der Außenfläche (30) des Verstärkungselements (24) vorsteht, wobei die Verstärkungsrippe (70) sich zwischen dem oberen Abschnitt (60) und dem unteren Abschnitt (62) der Hülle (26) erstreckt.

5. Türflügel eines Kraftfahrzeugs (10) gemäß Anspruch 3 oder 4, wobei das Verstärkungselement (24) aufweist einen zentralen Teil (34), der sich wenigstens teilweise entlang der Hauptebene (P) erstreckt, und umgebogene seitliche Endteile (29, 40), die einen Winkel ungleich null mit dem zentralen Teil (34) bilden, wobei die Hülle (26) wenigstens zwei Endrippen (72, 74) aufweisen, die sich zwischen dem oberen Abschnitt (60) und dem unteren Abschnitt (62) der Hülle (26) erstrecken, wobei jeder umgebogene seitliche Endteil (39, 40) des Verstärkungselements (24) wenigstens teilweise von einer Endrippe (72, 74) überformt ist.

6. Türflügel eines Kraftfahrzeugs (10) gemäß Anspruch 5, wobei ein oberes Ende (36) des Verstärkungselements (24) bezüglich des zentralen Teils (34) des Verstärkungselements (24) geneigt ist, wobei das obere Ende (36) des Verstärkungselements (24) von der Hülle (26) überformt ist.

7. Türflügel eines Kraftfahrzeugs (10) gemäß irgendeinem der vorhergehenden Ansprüche, wobei eine Öffnung (44) in einer Dicke des Verstärkungselements (24) ausgebildet ist zum Aufnehmen eines Schlossmechanismus des Türflügels (12), wobei sich ein Rand (45) der Öffnung (44) zwischen der Außenfläche (30) und der Innenfläche (32) des Verstärkungselements (24) erstreckt und von der Hülle (26) überformt ist.

8. Türflügel eines Kraftfahrzeugs (10) gemäß irgendeinem der vorhergehenden Ansprüche, wobei das Verstärkungselement (24) wenigstens einen Schaft (46, 54) hat, der sich von der Innenfläche (32) des Verstärkungselements (24) aus vorstehend erstreckt, wobei der Schaft (46, 54) eine erste Wandung (48), die ein Loch (50) definiert, und eine zweite Wandung (52) hat, die von der Hülle (26) überformt ist, wobei die zweite Wandung (52) entgegengesetzt zu der ersten Wandung (48) ist.

9. Türflügel eines Kraftfahrzeugs (10) gemäß irgendeinem der vorhergehenden Ansprüche, wobei die Hülle (26) aus einem einzigen Stück geformt ist.

10. Türflügel eines Kraftfahrzeugs (10) gemäß irgendeinem der vorhergehenden Ansprüche, welcher wenigstens einen Teil einer Heckklappe bildet, welche ein Schloss aufweist, das wenigstens teilweise an dem Verstärkungselement (24) fixiert ist.

## Claims

1. An opening part (12) of a motor vehicle (10) comprising a reinforcing element (24) extending at least partially along a main plane (P), intended to reinforce fasteners and the environment of a lock of the opening part (12), and an envelope (26) made from plastic, comprising an inner part overmolded at least partially on an inner face (32) of the reinforcing element (24),
the reinforcing element (24) comprising a plurality of orifices (42), and the envelope (26) comprising at least one outer part including a plurality of segments (64) each traversing an orifice (42) and a plurality of covering parts (66) each locally covering an edge of an orifice (42) of the plurality of orifices on an outer face (30) of the reinforcing element (24),
**characterized in that** the outer part of the envelope (26) comprises at least one rib (68) connecting the covering parts (66) to one another.

2. The opening part of the motor vehicle (10) according to claim 1, wherein each orifice (42) of the plurality of orifices has a circular shape and a center, and wherein, for each orifice (42) of the plurality of orifices, the covering part (66) locally covering the edge of this orifice (42) extends on the outer face (30) of the reinforcing element (24) over a limited area around this orifice (42) and in all radial directions around the orifice (42), the covering part (66) extending from the center of this orifice (42) over a distance comprised between 0.5 millimeter and 30 millimeters along the said radial directions.

3. The opening part of the motor vehicle (10) according to claim 1 or 2, wherein the inner part of the envelope (26) comprises a central portion (58) covering at least part of the inner face (32) of the reinforcing element (24), extending in a plane parallel to the main plane, the envelope (26) further comprising at least one upper portion (60) and one lower portion (62) each extending from the central portion (58), the upper portion (60) and the lower portion (62) being inclined by a non-zero angle relative to the central portion (58) and extending protruding from the central portion (58) on the side of the outer face (30) of the reinforcing element (24).

4. The opening part of the motor (10) vehicle according to claim 3, wherein the outer part of the envelope (26) includes at least one reinforcing rib (70) protruding from the outer face (30) of the reinforcing element (24), said reinforcing rib (70) extending between the upper portion (60) and the lower portion (62) of the envelope (26).

5. The opening part of the motor vehicle (10) according to claim 3 or 4, wherein the reinforcing element (24) comprises a central part (34) extending at least partially in the main plane (P) and curved lateral end parts (39, 40) forming a non-zero angle with the central part (34), the envelope (26) comprising at least two end ribs (72, 74) extending between the upper portion (60) and the lower portion (62) of the envelope (26), each curved lateral end part (39, 40) of the reinforcing element (24) being at least partially overmolded by an end rib (72, 74).

6. The opening part of the motor vehicle (10) according to claim 5, wherein an upper end (36) of the reinforcing element (24) is inclined relative to the central part (34) of the reinforcing element (24), the upper end (36) of the reinforcing element (24) being overmolded by the envelope (26).

7. The opening part of the motor vehicle (10) according to any one of the preceding claims, wherein an opening (44) is arranged in a thickness of the reinforcing element (24) to receive a lock mechanism of the opening part (12), a border (45) of the opening (44) extending between the outer face (30) and the inner face (32) of the reinforcing element (24) and being overmolded by the envelope (26).

8. The opening part of the motor vehicle (10) according to any one of the preceding claims, wherein the reinforcing element (24) has at least one barrel (46, 54) protruding from the inner face (32) of the reinforcing element (24), the barrel (46, 54) comprising a first wall (48) defining a hole (50) and a second wall (52) overmolded by the envelope (26), the second wall (52) being opposite the first wall (50).

9. The opening part of the motor vehicle (10) according to any one of the preceding claims, wherein the envelope (26) is formed in a single piece.

10. The opening part of the motor vehicle (10) according to any one of the preceding claims, forming at least part of a tailgate comprising a lock fastened at least partly on the reinforcing element (24).
